# EUROPEAN PATENT APPLICATION

(11) **EP 4 660 746 A2**
(43) Date of publication of application: **10.12.2025**
(21) Application number: 24764065.9
(22) Date of filing: 03.01.2024
(51) Int. Cl.: G06F 1/16, G06F 1/20

(54) **ELECTRONIC DEVICE INCLUDING THERMAL HINGE ASSEMBLY**

(30) Priority: 27.02.2023 KR 20230025986; 30.03.2023 KR 20230042240
(71) Applicant: Samsung Electronics Co., Ltd., Suwon-si, Gyeonggi-do 16677 (KR)
(72) Inventor: CHUNG, Haein, Suwon-si, Gyeonggi-do 16677 (KR); PARK, Jihoon, Suwon-si, Gyeonggi-do 16677 (KR)
(74) Representative: HGF
(86) International application number: PCT/KR2024/000131
(87) International publication number: WO 2024/181665

(57) **Abstract**

An electronic device according to an embodiment may comprise: a first housing including at least one first heat-generating body; a second housing including at least one second heat-generating body; and a thermal hinge assembly connecting the first and second housings such that the first and second housings can rotate about a hinge axis. The thermal hinge assembly may include: a first hollow hinge member made of a metal material; a second hollow hinge member spaced apart from the first hollow hinge member along the hinge axis; a center hinge member disposed between the first and second hollow hinge members along the hinge axis; at least one heat transfer member that passes through the first and second hollow hinge members and the center hinge member and is thermally coupled to the first and second hollow hinge members and the center hinge member; a first rotation guide part coupled to one end of the center hinge member and the first hollow hinge member; and a second rotation guide part coupled to the other end of the center hinge member and the second hollow hinge member. Various other embodiments that can be understood through the specification are also possible.

## Description

### [Technical Field]

The disclosure relates to an electronic device including a thermal hinge assembly which is capable of transferring heat.

### [Background Art]

An electronic device like a laptop may include two housings and a hinge assembly which rotatably connects the two housings. For example, a data input part (for example, a plurality of keys, a touch pad, or a touch screen) may be disposed in one housing, and a data output part (for example, a display) may be disposed in the other housing.

Such an electronic device may have a blowing device such as a cooling fan to discharge internal heat of the housings to the outside. Due to noises of cooling fans, electronic devices including separate cooling devices without cooling fans are emerging.

For example, as a separate cooling device, an electronic device may have a structure that includes a heat pipe bent multiple times and disposed in two housings, respectively, and radiates heat of heat generation elements to the outside via a hinge assembly.

The above information is presented as related art information only to assist with understanding of the disclosure. No determination or assertion is made as to whether any of the above might be applicable as prior art with regard to the disclosure.

### [Disclosure of Invention]

### [Technical Problem]

However, since such an electronic device has a heat pipe disposed in a hinge assembly or a housing to discharge heat, the thickness of the hinge assembly may increase and the thickness of the housing may increase, and in particular, the durability of the hinge assembly for transferring heat may be degraded.

For example, when a heat pipe of a copper material is formed considering heat transference, the hinge assembly may be deformed due to the rotation of the housing when the housing rotates.

When the heat pipe of the copper material is disposed in a housing, for example, a housing in which a display is disposed, considering heat transference, the thickness of the housing including the display may increase.

The technical objects to be achieved by the disclosure are not limited to those mentioned above, and other technical objects that are not mentioned above may be clearly understood to those skilled in the art based on the description provided below.

### [Solution to Problem]

As a technical means to achieve the above-described technical object, according to an embodiment, there is provided an electronic device including a thermal hinge assembly which is advantageous to slimness of the electronic device.

According to various embodiments of the disclosure, there is provided an electronic device including a thermal hinge assembly which is advantageous to slimness of a housing in which a display is disposed.

According to various embodiments of the disclosure, there is provided an electronic device including a thermal hinge assembly which functions to transfer heat and improves rotation durability involved in rotational operations.

According to various embodiments of the disclosure, there is provided an electronic device including a thermal hinge assembly which minimizes a thermal resistance between hinge components by allowing at least one heat pipe to penetrate between hinge components constituting the hinge assembly.

According to various embodiments of the disclosure, an electronic device may include: a first housing including at least one first heat generation element; a second housing including at least one second heat generation element; and a thermal hinge assembly configured to rotatably connect the first, second housings with reference to a hinge axis, and the thermal hinge assembly may be made of a metallic material and may include: a first hollow hinge member; a second hollow hinge member disposed to be spaced apart from the first hollow hinge member along the hinge axis; a center hinge member disposed between the first, second hollow hinge members and disposed along the hinge axis; at least one heat transfer member disposed to penetrate through the first, second hollow hinge members and the center hinge member, and thermally coupled with the first, second hollow hinge members and the center hinge member; a first rotation guide part coupled with one end of the center hinge member and the first hollow hinge member; and a second rotation guide part coupled with the other end of the center hinge member and the second hollow hinge member.

### [Advantageous Effects of Invention]

According to various embodiments of the disclosure, it is effective in reducing a thickness of a housing in which a display is disposed, and rotation durability involved in rotation of the housing may be enhanced.

According to various embodiments of the disclosure, deformation and damage of a heat transfer member caused by rotational operations of a housing may be relatively reduced.

According to various embodiments, an electronic device may implement sufficient heat transfer paths between first, second housings.

The technical objects achieved by the disclosure are not limited to those mentioned above, and other technical objects that are not mentioned above may be clearly understood to those skilled in the art based on the description provided below.

### [Brief Description of Drawings]

FIG. 1A is a perspective view illustrating an electronic device in a folding state according to an embodiment of the disclosure.
FIG. 1B is a perspective view illustrating a thermal hinge assembly in a folding state according to an embodiment of the disclosure.
FIG. 2A is a perspective view illustrating the electronic device which is unfolded by about 90 degrees according to an embodiment of the disclosure.
FIG. 2B is a perspective view illustrating the thermal hinge assembly which is unfolded by about 90 degrees according to an embodiment of the disclosure.
FIG. 3 is a top view illustrating separated parts of a thermal hinge assembly according to an embodiment of the disclosure.
FIG. 4 is a top view illustrating an assembled thermal hinge assembly according to an embodiment of the disclosure.
FIG. 5 is a cross-sectional view illustrating some of the separated parts of the thermal hinge assembly according to an embodiment of the disclosure.
FIG. 6 is a cross-sectional view illustrating the assembled thermal hinge assembly according to an embodiment of the disclosure.
FIG. 7 is a view illustrating a heat transfer path of a thermal hinge assembly according to an embodiment of the disclosure.
FIG. 8 is a view illustrating a coupling structure between hinge members according to an embodiment of the disclosure.
FIG. 9 is a view illustrating a coupling structure between hinge members according to an embodiment of the disclosure.
FIG. 10A is a view illustrating a hinge arm in a folding state, as a perspective view illustrating a state in which the hinge arm is coupled to a center hinge member according to an embodiment of the disclosure.
FIG. 10B is a view illustrating the hinge arm which is unfolded by about 90 degrees, as a perspective view illustrating a state in which the hinge arm is coupled to the center hinge member according to an embodiment of the disclosure.
FIGS. 11, 12, 13, 14, 15, 16, 17, and 18 are views illustrating a structure of a thermal hinge assembly, respectively, according to various embodiments.
FIG. 19 is a block diagram of an electronic device in a network environment according to various embodiments.

Regarding explanation of the drawings, the same or like reference numerals may be used to refer to the same or like components.

### [Mode for the Invention]

Hereinafter, various embodiments of the disclosure will be described in detail with reference to the accompanying drawings so that a person skilled in the art can easily embody. However, the disclosure may be implemented in different forms and is not limited to the embodiments set forth herein. In addition, in the drawings, parts having nothing to do with the descriptions are omitted for the clear description of the disclosure, and throughout the specification, the same or like reference numerals are used for the same or like elements.

The terms used in the disclosure are described as general terms currently used considering the functions mentioned in the disclosure, but may refer to various other terms according to the intent of those skilled in the art, precedent, the emergence of new technologies. Accordingly, the terms used in the disclosure should not be interpreted solely based on their names and should be interpreted based on the meaning of the terms and the whole context of the disclosure.

In addition, such terms as "1st" and "2nd," or "first" and "second" may be used to explain various components, but the components should not be limited by such terms. These terms may be used for the purpose of distinguishing one component from other components.

Throughout the specification, it is to be understood that if an element is referred to as "connected with/to" another element, it means that the element may be "directly connected" with another element or may be "electrically connected" with another element via an intervening element therebetween. It will be further understood that when a certain portion is referred to as "including" a certain element, it means that the certain portion does not exclude other components and may further include other components unless the context clearly indicates otherwise.

The phrase "in an embodiment" used in the disclosure does not necessarily indicate the same embodiment.

An embodiment of the disclosure may be represented by functional block configurations and various processing steps. Some or all of the functional blocks may be implemented by various numbers of hardware and/or software configurations that perform specific functions. For example, the functional blocks of the disclosure may be implemented by one or more microprocessors or may be implemented by circuit configurations for predetermined functions. In addition, for example, the functional blocks of the disclosure may be implemented by various programming or scripting languages. The functional blocks may be implemented by an algorithm that is executed in one or more processors. The disclosure may employ related-art technologies for electronic configuration, signal processing, and/or data processing. Such terms "mechanism", "element", "means", and "configuration" may be broadly used and are not limited to mechanical and physical configurations.

In addition, connecting lines or connecting members among components shown in the drawings are only examples of functional connection and/or physical or circuitry connections. In an actual device, connections among components may be represented by a variety of alternative or additional functional connection, physical connection, or circuit connections.

Hereinafter, the disclosure will be described in detail with reference to the accompanying drawings.

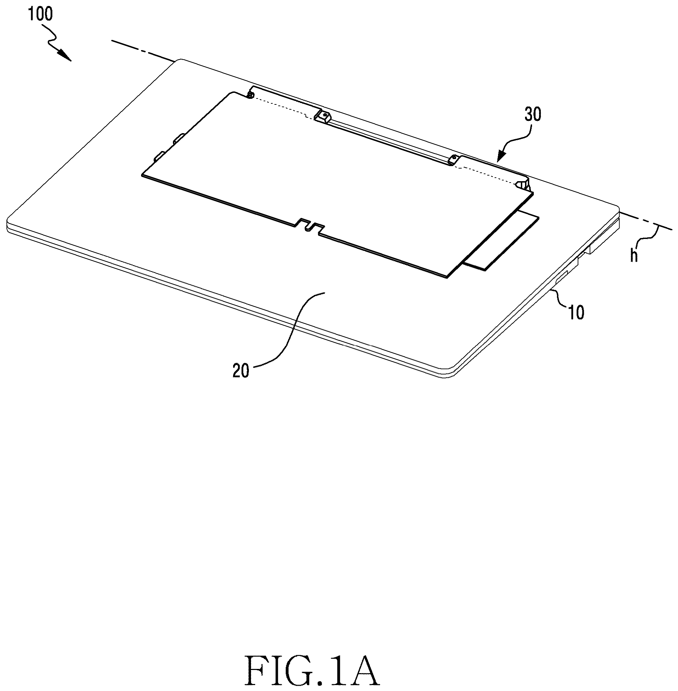

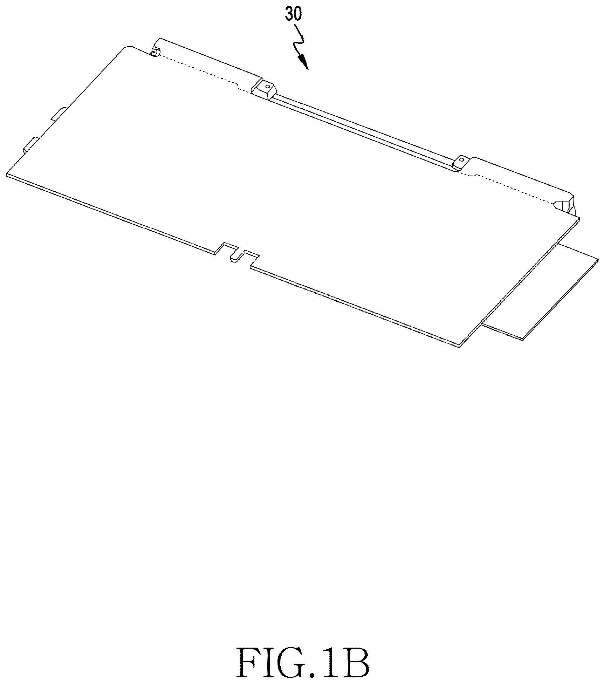

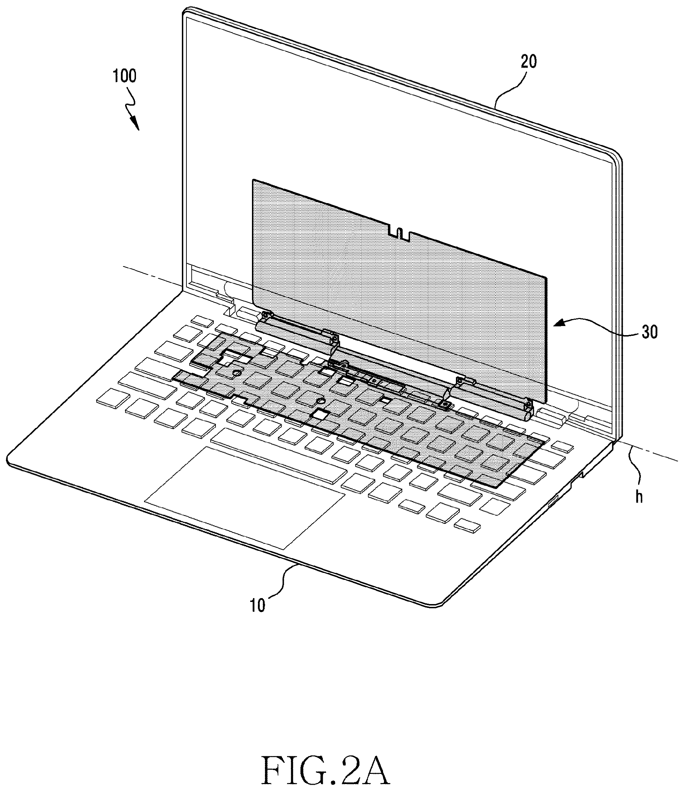

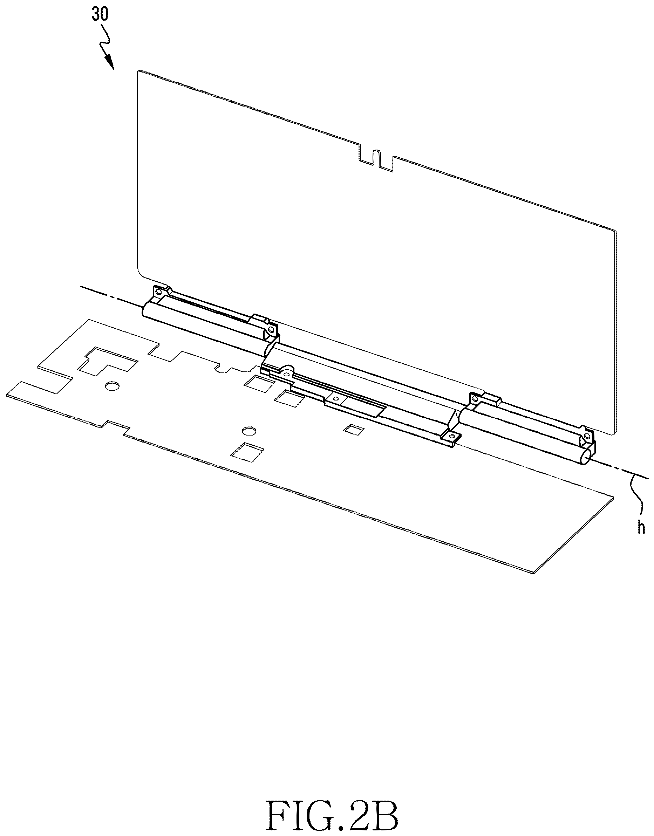

FIG. 1A is a perspective view illustrating an electronic device in a folding state according to an embodiment of the disclosure. FIG. 1B is a perspective view illustrating a thermal hinge assembly in a folding state according to an embodiment of the disclosure. FIG. 2A is a perspective view illustrating the electronic device which is unfolded by about 90 degrees according to an embodiment of the disclosure. FIG. 2B is a perspective view illustrating the thermal hinge assembly which is unfolded by about 90 degrees according to an embodiment of the disclosure.

Referring to FIGS. 1A, 1B, 2A, and 2B, the electronic device 100 according to an embodiment may include first, second housing 10, 20, and a thermal hinge assembly 30. According to an embodiment, the first, second housings 10, 20 may be rotatably connected by the thermal hinge assembly 30. According to an embodiment, the first housing 10 may include at least one data input part, and the second housing 20 may include at least one data output part. For example, the data input part may include at least one of a plurality of keys, a touch screen, or at least one touch pad. For example, the data output part may include any one of a display or a touch screen display.

According to an embodiment, the second housing 20 may go into any one state of a state in which the second housing 20 is unfolded by about 90 degrees or between 120 and 130 degrees, from the first housing 10 by the thermal hinge assembly 30, or unfolding/folding state. A stopping force of the second housing 20 may be provided from the thermal hinge assembly 30. For example, the thermal hinge assembly 30 may be a damping hinge assembly. The mentioned stopping force may refer to a force that allows the second housing 20 to remain stationary at a specific angle, for example, about 120 degrees.

According to an embodiment, the second housing 20 may be disposed to be rotatable relative to the first housing 10 with reference to a hinge axis h by the thermal hinge assembly 30, and may be disposed to be capable of transferring heat. According to an embodiment, the first housing 10 may include at least one first heat generation element, and the second housing 20 may include at least one second heat generation element. For example, the first heat generation element may include a main printed circuit board, and the second heat generation element may include a display circuit board. According to an embodiment, the main printed circuit board or the display circuit board may be any one of a rigid material or a flexible material.

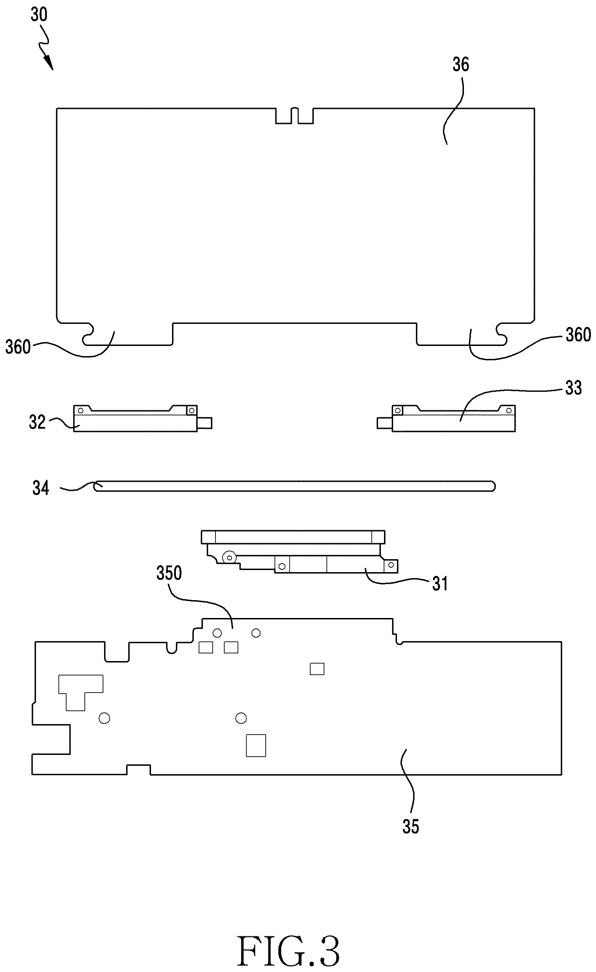

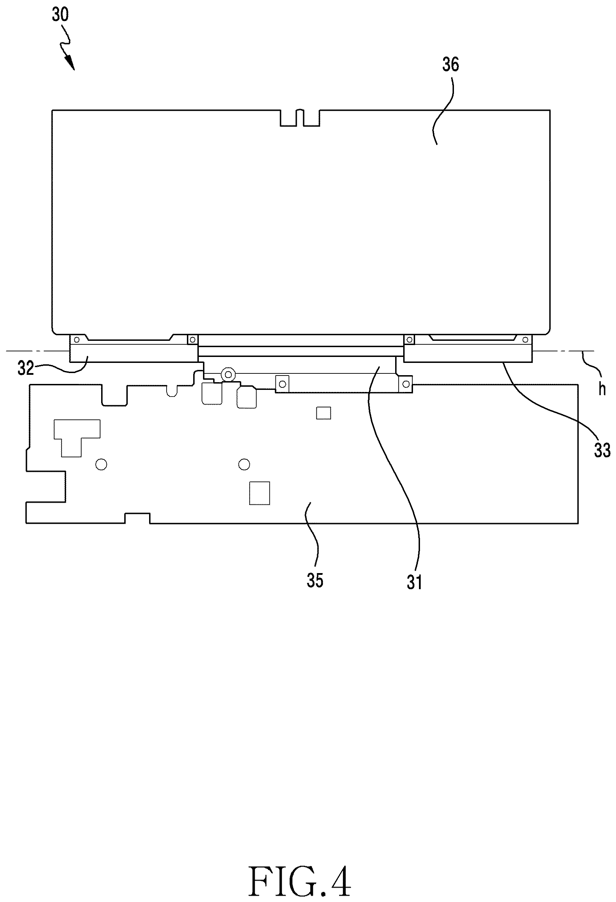

FIG. 3 is a top view illustrating separated parts of a thermal hinge assembly according to an embodiment of the disclosure. FIG. 4 is a top view illustrating an assembled thermal hinge assembly according to an embodiment of the disclosure.

Referring to FIGS. 3, 4, the thermal hinge assembly 30 according to an embodiment may include a rotation function, a connection function, and a heat transfer function. According to an embodiment, the thermal hinge assembly 30 may include a center hinge member 31, a first hollow hinge member 32, a second hollow hinge member 33, and a heat transfer member 34. According to an embodiment, the first, second hollow hinge members 32, 33 and the center hinge member 31 may be thermally coupled along a hinge axis h.

According to an embodiment, the center hinge member 31 may be disposed in a first housing 10 (for example, the first housing 10 of FIGS. 1A and 2A), and the first, second hollow hinge members 32, 33 may be disposed in a second housing 20 (for example, the second housing 20 of FIGS. 1A and 2A). According to an embodiment, the center hinge member 31 may be coupled with a first thermal spreader 35, and the first thermal spreader 35 may be disposed to face the first housing 10. According to an embodiment, the first, second hollow hinge members 32, 33 may be coupled with a second thermal spreader 36, and the second thermal spreader 36 may be disposed to face the second housing 20. For example, the first thermal spreader 35 or the second thermal spreader 36 may be a heat transfer member and may be of a thin-film shape.

According to an embodiment, the first thermal spreader 35 may function to transfer, to the center hinge member 31, heat that is transferred to the first heat generation element disposed in the first housing 10, for example, a main printed circuit board, and the second thermal spreader 36 may function to transfer, to the second housing 20, heat that is transferred from the first, second hollow hinge members 32, 33.

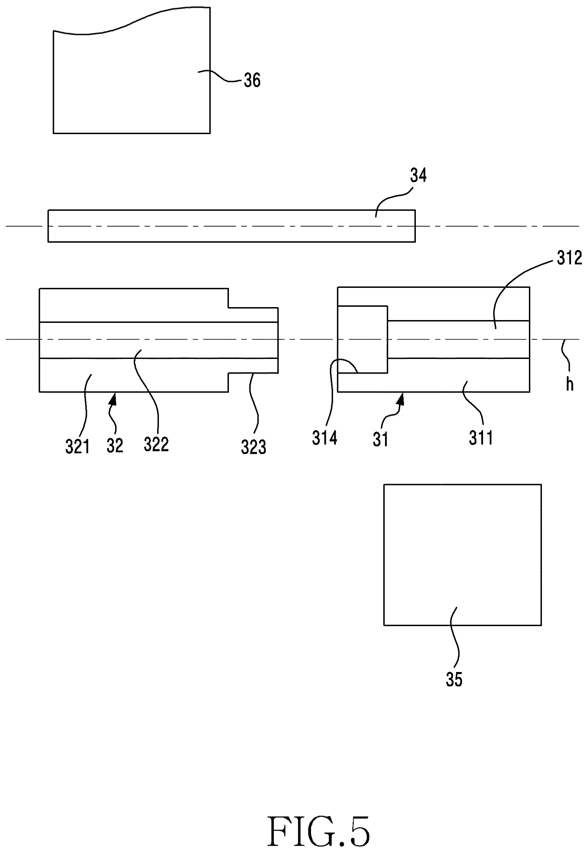

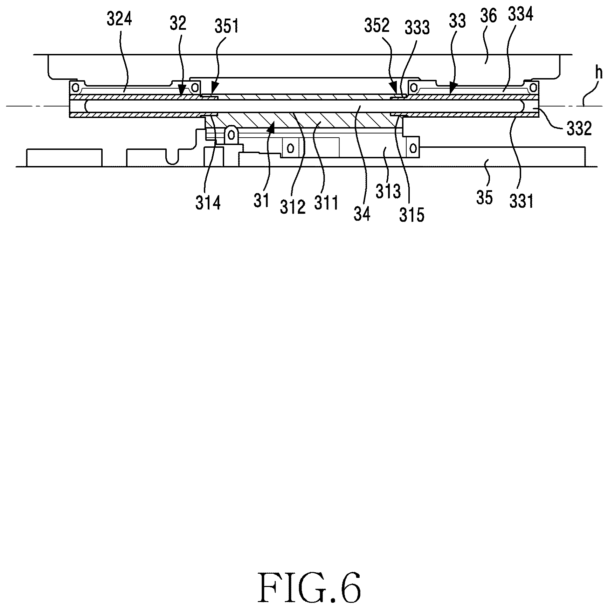

FIG. 5 is a cross-sectional view illustrating separated parts of the thermal hinge assembly according to an embodiment of the disclosure. FIG. 6 is a cross-sectional view illustrating the assembled thermal hinge assembly according to an embodiment of the disclosure.

Referring to FIGS. 5, 6, the center hinge member 31 according to an embodiment may include a center hinge body 311, a cylindrical opening 312 disposed inside the center hinge body 311, a fastening part 313 formed on an outer circumference of the center hinge body 311, and first, second coupling grooves 314, 315 formed on both ends of the center hinge body 311.

According to an embodiment, the first hollow hinge member 32 may include a first hinge body 321, a first cylindrical opening 322 formed inside the first hinge body 321, a first protrusion 323 formed on one end of the first hinge body 321, and a first fastening part 324 formed on an outer circumference of the first hinge body 321. According to an embodiment, the first cylindrical opening 322 may be a space into which the heat transfer member 32 is inserted, the first fastening part 324 may be a part that is fastened with the second thermal spreader 36, and the first protrusion 323 may be a part that is inserted into the first coupling groove of the center hinge member 31.

According to an embodiment, the second hollow hinge member 33 may include a second hinge body 331, a second cylindrical opening 332 formed inside the second hinge body 331, a second fastening part formed on an outer circumference of the second hinge body 331, and a second protrusion 333 formed on one end of the second hinge body 331. According to an embodiment, the second cylindrical opening 332 may be a space into which the heat transfer member 34 is inserted, the second fastening part 334 may be a part that is fastened with the second thermal spreader 36, and the second protrusion 333 may be a part that is inserted into the other end of the center hinge member 31.

According to an embodiment, the heat transfer member 34 may be disposed along the hinge axis *h* as a thermal member and a connection member which are disposed to penetrate through the first, second hollow hinge members 32, 33 and the center hinge member 31. According to an embodiment, the heat transfer member 34 may be a cooling radiation member including a vapor chamber, for example, at least one heat pipe. Hereinafter, the heat transfer member 34 may be referred to as a heat pipe.

According to an embodiment, when the heat pipe 34 is thermally coupled with the first, second hollow hinge members 32, 33 and the center hinge member 31, the heat pipe 34, the first, second hollow hinge members 32, 33 and the center hinge member 31 may be disposed along the hinge axis h. According to an embodiment, the heat pipe 34 may have a cylindrical shape and may have an outer circumference closely and thermally coupled with the cylindrical opening 312, the first, second cylindrical openings 322, 332.

According to an embodiment, a first rotation guide part 351 may be disposed between one end of the center hinge member 31 and the first hollow hinge member 32, and a second rotation guide part 352 may be disposed between the other end of the center hinge member 31 and the second hollow hinge member 33. According to an embodiment, the first rotation guide part 351 may facilitate a rotatable, more precise co-axial assembly between one end of the center hinge member 31 and the first hollow hinge member 32, and the second rotation guide part 352 may facilitate a rotatable, more precise co-axial assembly between the other end of the center hinge assembly 31 and the second hollow hinge member 33.

According to an embodiment, the first rotation guide part 351 may include the first coupling groove 314 formed on one side of the center hinge member 31, and the first protrusion 323 formed on one side of the first hollow hinge member 32. According to an embodiment, the second rotation guide part 352 may include the second coupling groove 315 formed on the other side of the center hinge member 31, and the second protrusion 333 formed on one side of the second hollow hinge member 33. For example, the diameter of the first coupling groove 314 and the diameter of the first protrusion 323 may be substantially the same, and the diameter of the second coupling groove 315 and the diameter of the second protrusion 333 may be substantially the same. For example, each of the first, second coupling grooves may not necessarily be limited to the cylindrical shape, and may have a conical shape such a cup-like shape, and each of the first, second protrusions may not necessarily be limited to the cylindrical shape, and may have a conical shape such as a cup-like shape.

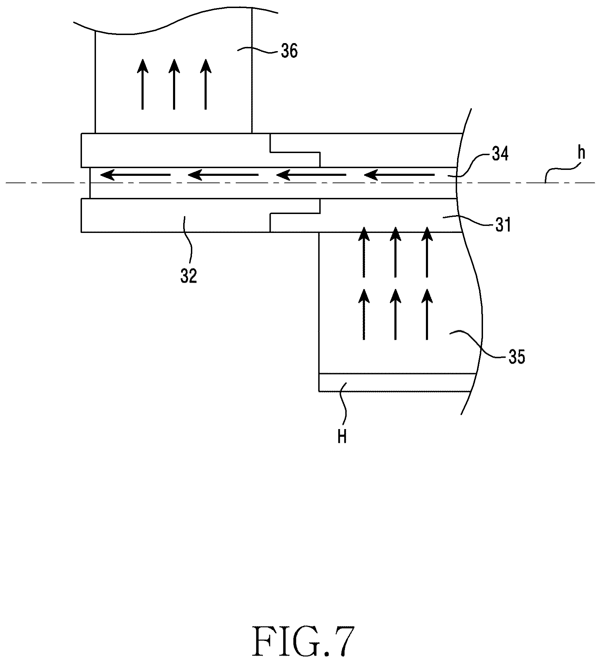

FIG. 7 is a view illustrating a heat transfer path of a thermal hinge assembly according to an embodiment of the disclosure.

Referring to FIG. 7, according to an embodiment, a heat transfer path may be formed such that heat generated in a heat generation element H accommodated in a first housing, for example, a main printed circuit board, may be transferred to a first thermal spreader 35, the transferred heat may be transferred to a heat pipe 34, the transferred heat of the heat pipe 34 may be transferred to a first hollow hinge member 32, and then, may be transferred to a second thermal spreader 36. In addition, a heat transfer path may be formed such that heat of the heat pipe 34 may be transferred to a second hollow hinge member (for example, the second hollow hinge member 33 of FIG. 6), and then, may be transferred to the second thermal spreader 36. Finally, heat transferred to the second thermal spreader 36 may be transferred to a second housing (for example, the second housing 20 shown in FIGS. 1A and 2A) and may be discharged to the outside. The arrows illustrated may indicate a heat transfer flow.

According to an embodiment, the first thermal spreader 35 may be thermally coupled to a part of the first housing (for example, the first housing 10 shown in FIGS. 1A and 2A), the first thermal spreader 35 and the center hinge member 31 may be thermally coupled to each other, the center hinge member 31 and the heat pipe 34 may be thermally coupled to each other, the heat pipe 34 and the first, second hollow hinge members 32, 33 may be thermally coupled to each other, the first, second hollow hinge members 32, 33 and the second thermal spreader 36 may be thermally coupled to each other, and the second thermal spreader 36 may be thermally coupled with a part of the second housing (for example, the second housing 20 shown in FIGS. 1A and 2A).

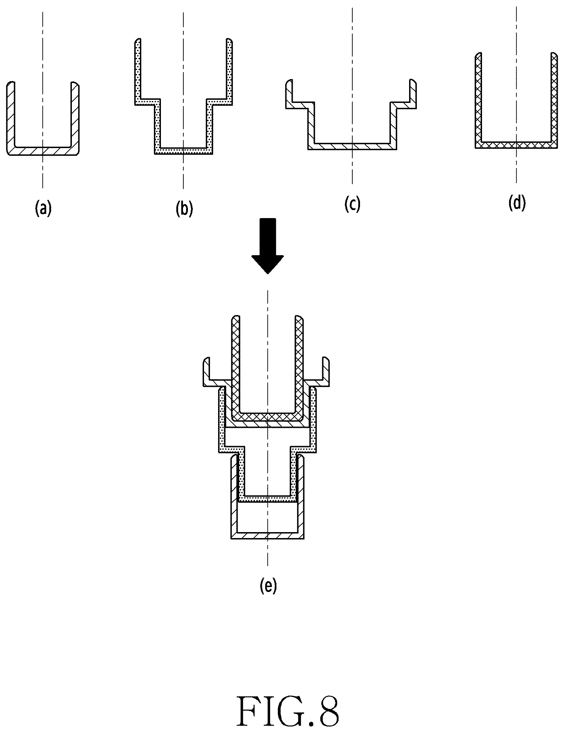

FIG. 8 is a view illustrating a coupling structure between hinge members according to an embodiment of the disclosure.

Referring to FIG. 8, a rotation guide part between hinge members may facilitate more precise coupling along the same axis (for example, a hinge axis) as coupling between a cylindrical groove and a cylindrical protrusion, and may minimize inter-axis eccentricity.

For example, more precise co-axial coupling between member (a) and member (b) may be facilitated, more precise co-axil coupling between member (b) and member (c) may be facilitated, and more precise co-axial coupling between member (c) and member (d) may be facilitated.

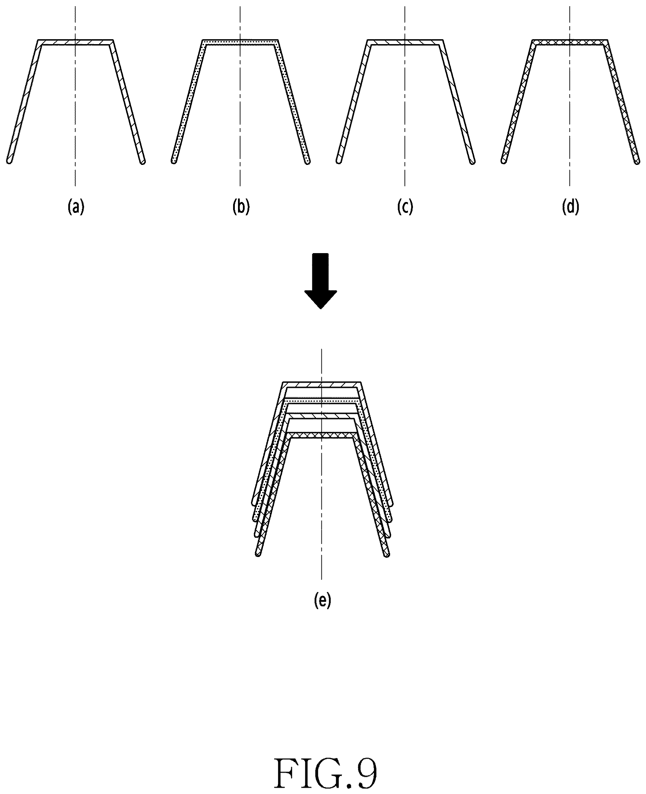

FIG. 9 is a view illustrating a coupling structure between hinge members according to an embodiment of the disclosure.

Referring to FIG. 9, a rotation guide part between hinge members may facilitate more precise coupling along the same axis (for example, a hinge axis) as coupling between a cup-like groove and a cup-like protrusion, and may minimize inter-axis eccentricity.

For example, more precise co-axial coupling between member (a) and member (b) may be facilitated, more precise co-axial coupling between member (b) and member (c) may be facilitated, and more precise co-axial coupling between member (c) and member (d) may be facilitated.

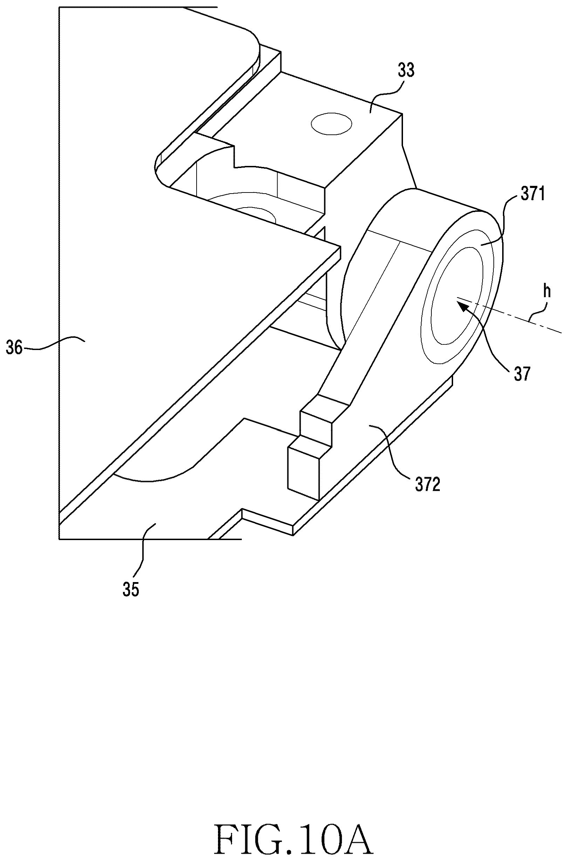

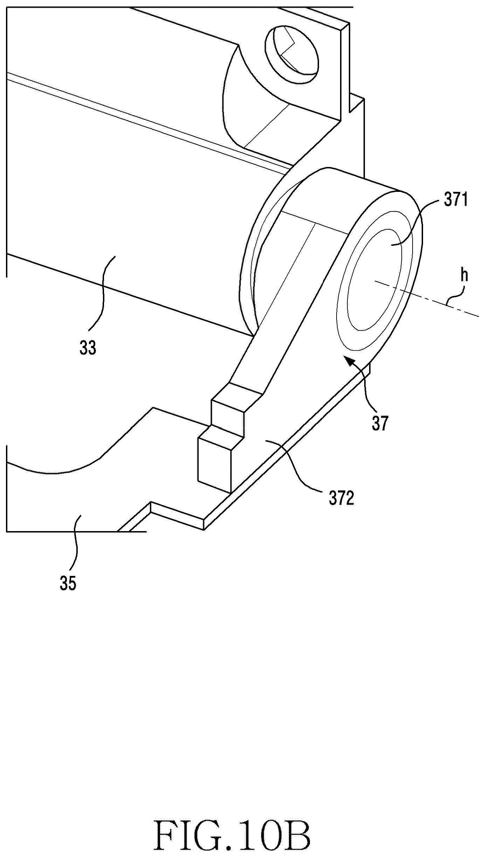

FIG. 10A is a view illustrating a hinge arm in a folding state as a perspective view illustrating a state in which the hinge arm is coupled to a center hinge member according to an embodiment of the disclosure. FIG. 10B is a view illustrating the hinge arm which is unfolded by about 90 degrees, as a perspective view illustrating a state in which the hinge arm is coupled to the center hinge member according to an embodiment of the disclosure.

Referring to FIGS. 10A, 10B, a thermal hinge assembly (for example, the thermal hinge assembly 30 shown in FIGS. 1 and 2) according to an embodiment may rotatably connect first, second housings 10, 20 (for example, the first, second housings 10, 20 of FIGS. 1A and 2A), and may include a hinge arm 37 which is coupled to one end of the second hollow hinge member 33. According to an embodiment, one end 371 of the hinge arm 37 may be coupled with one end of the second hollow hinge member 33, and the other end may be coupled with a first thermal spreader 35. Although not shown in the drawing, the first hollow hinge member 32 and the hinge arm 37 may be coupled in substantially the same way.

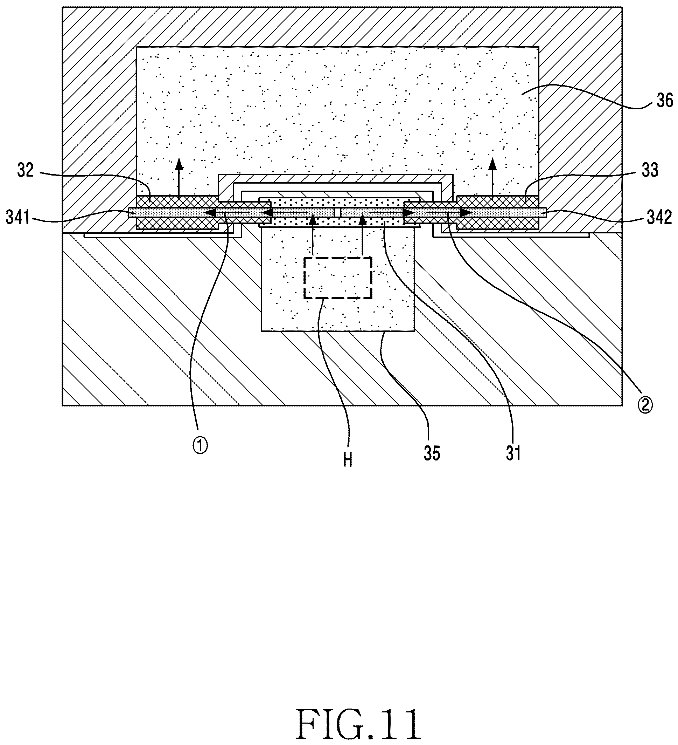

FIGS. 11, 12, 13, 14, 15, 16, 17, and 18 are views illustrating a structure of a thermal hinge assembly, respectively, according to various embodiments of the disclosure.

Referring to FIG. 11, a thermal hinge assembly (for example, the thermal hinge assembly 30 shown in FIGS. 1 and 2) according to an embodiment may form first, second heat transfer paths ①, ② in both directions through first, second heat pipes 341, 342. According to an embodiment, the first, second heat transfer paths ①, ② may be formed to be substantially symmetric with reference to a center hinge member 31.

According to an embodiment, the first heat transfer path ① may transfer heat in order of a heat generation element H, a first thermal spreader 35, the center hinge member 31, a first hollow hinge member 32, and a second thermal spreader 36. For example, the heat generation element H may be a main printed circuit board having a plurality of chips mounted therein, or may be a plurality of chips mounted.

According to an embodiment, the second heat transfer path ② may transfer heat in order of the heat generation element H, the first thermal spreader 35, the center hinge member 31, a second hollow hinge member 33, and the second thermal spreader 36.

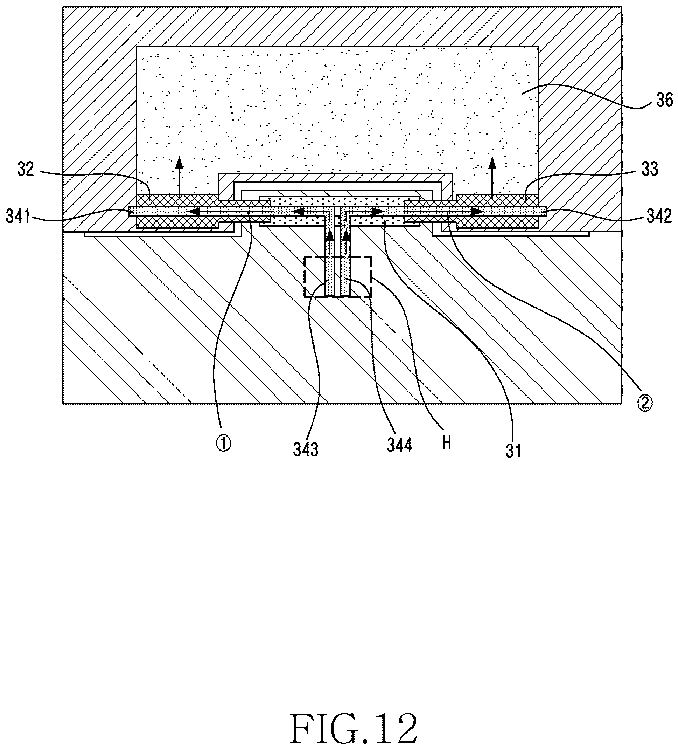

Referring to FIG. 12, the same configurations of a thermal hinge assembly according to an embodiment as the thermal hinge assembly shown in FIG. 11 may be omitted to prevent redundant explanations, and only the difference will be explained.

The thermal hinge assembly (for example, the thermal hinge assembly 30 shown in FIGS. 1 and 2) according to an embodiment may have two third, fourth heat pipes 343, 344 substituted for the first thermal spreader (for example, the first thermal spreader 35 of FIG. 11). The third heat pipe 343 may be thermally coupled to the center hinge member 31 and the first heat pipe 341, and the fourth heat pipe 344 may be thermally coupled to the center hinge member 31 and the second heat pipe 342.

According to an embodiment, the first, second heat transfer paths ①, (2) may be formed to be substantially symmetric with reference to the center hinge member 31.

According to an embodiment, the first heat transfer path ① may transfer heat in order of the heating member H, the third heat pipe 343, the center hinge member 31, the first hollow hinge member 32, and the second thermal spreader 36.

According to an embodiment, the second heat transfer path ② may transfer heat in order of the heating member H, the fourth heat pipe 344, the center hinge member 31, the second hollow hinge member 33, and the second thermal spreader 36.

For example, the first heat pipe 341 and the third heat pipe 343 may be an integral type or a separate type, and the second heat pipe 342 and the fourth heat pipe 344 may be an integral type or a separate type.

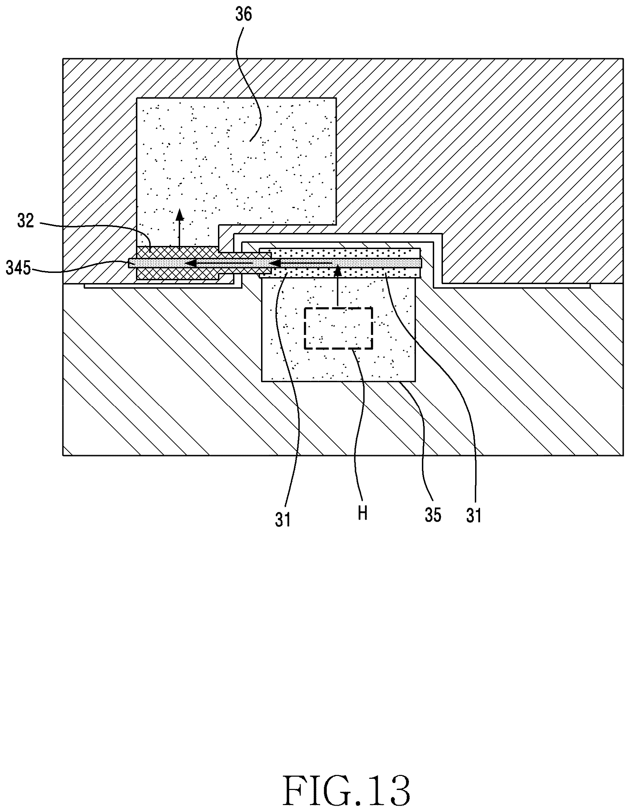

Referring to FIG. 13, a thermal hinge assembly (for example, the thermal hinge assembly 30 shown in FIGS. 1 and 2) according to an embodiment may form a single heat transfer path in one direction through a single heat pipe 345. According to an embodiment, the single heat transfer path may be formed in a certain region in one side with reference to the center hinge member 31.

According to an embodiment, the single heat transfer path may transfer heat in order of a heat generation element H, a first thermal spreader 35, a center hinge member 31, the single heat pipe 345, a hollow hinge member 32, and a second thermal spreader 36. For example, the heat generation element H may be a main printed circuit board having a plurality of chips mounted therein, or may be a plurality of chips mounted.

According to an embodiment, the second thermal spreader 36 may be formed with an area of approximately half of the area of the second thermal spreader shown in FIG. 11.

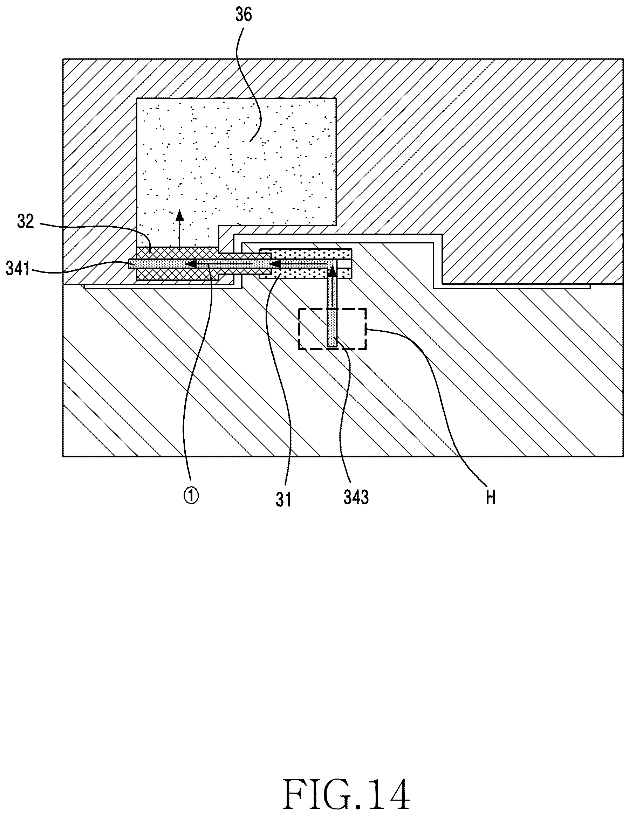

Referring to FIG. 14, the same configurations of a thermal hinge assembly according to an embodiment as the thermal hinge assembly shown in FIG. 13 may be omitted to prevent redundant explanations, and only the difference will be explained.

The thermal hinge assembly (for example, the thermal hinge assembly 30 shown in FIGS. 1 and 2) according to an embodiment may have a second heat pipe 343 substituted for the first thermal spreader. The second heat pipe 343 may be thermally coupled to the center hinge arm 31 and the first heat pipe 341. According to an embodiment, a heat transfer path may be formed in one side with reference to the center hinge member 31.

According to an embodiment, the heat transfer path may transfer heat in order of a heat generation element H, the second heat pipe 343, the center hinge member 31, the hollow hinge member 32, and the second thermal spreader 36. For example, the first heat pipe 341 and the second heat pipe 343 may be an integral type or a separate type.

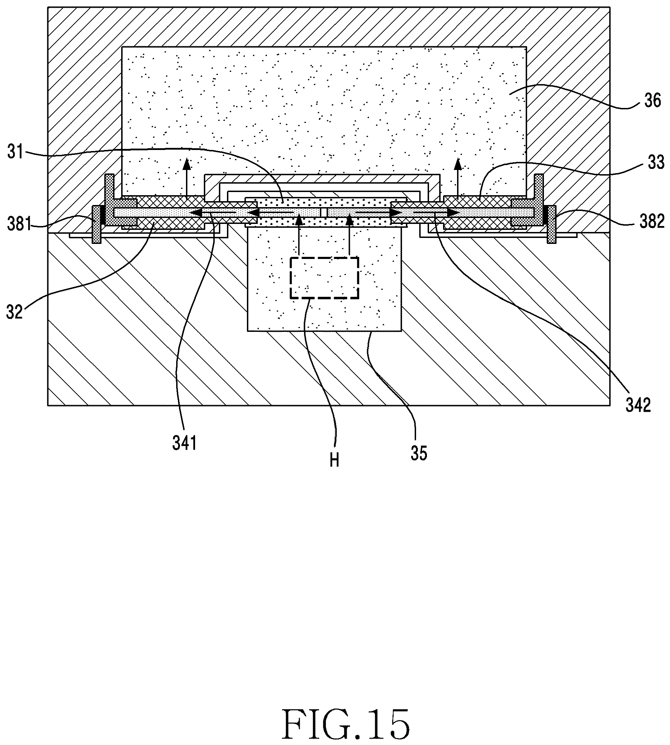

Referring to FIG. 15, the same configurations of a thermal hinge assembly according to an embodiment as the thermal hinge assembly shown in FIG. 11 may be omitted to prevent redundant explanations, and only the difference will be explained.

The thermal hinge assembly (for example, the thermal hinge assembly 30 shown in FIGS. 1A and 2A) according to an embodiment may have first, second hinge arms 381, 382 coaxially disposed along a hinge axis *h*. According to an embodiment, the first hinge arm 381 may be connected to the first hollow hinge member 32, and the second hinge arm 382 may be connected to the second hollow hinge member 33. According to an embodiment, the first hinge arm 381 may be coupled to an external end of the first hollow hinge member 32, and the second hinge arm 382 may be coupled to an external end of the second hollow hinge member 33.

According to an embodiment, the first, second hinge arms 381, 382 may function to rotatably connect first, second housings (for example, the first, second housings 10, 20 of FIGS. 1A and 2A).

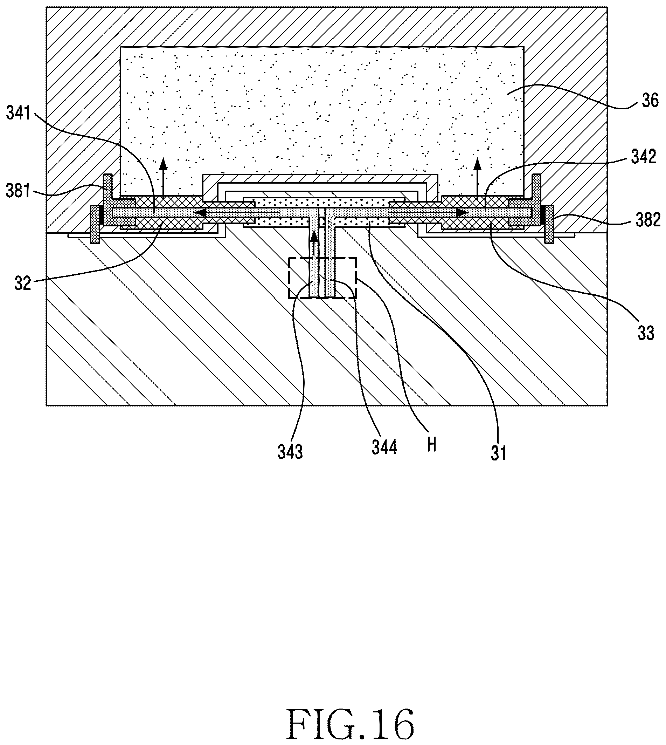

Referring to FIG. 16, the same configurations of a thermal hinge assembly according to an embodiment as the thermal hinge assembly shown in FIG. 12 may be omitted to prevent redundant explanation, and only the difference will be explained.

The thermal hinge assembly (for example, the thermal hinge assembly 30 shown in FIGS. 1A and 2A) according to an embodiment may have first, second hinge arms 381, 382 coaxially disposed along a hinge axis *h*. According to an embodiment, the first hinge arm 381 may be connected to the first hollow hinge member 32, and the second hinge arm 382 may be connected to the second hollow hinge member 33. According to an embodiment, the first hinge arm 381 may be connected to an external end of the first hollow hinge member 32, and the second hinge arm 382 may be connected to an external end of the second hollow hinge member 33. According to an embodiment, the first, second hinge arms 381, 382 may function to rotatably connect first, second housings (for example, the first, second housings 10, 20 shown in FIGS. 1A and 2A).

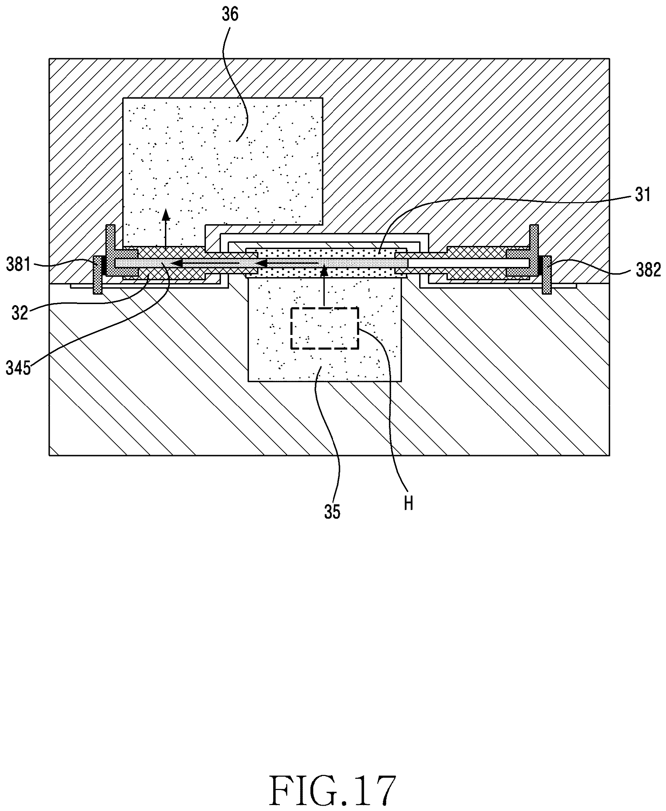

Referring to FIG. 17, the same configurations of a thermal hinge assembly according to an embodiment as the thermal hinge assembly shown in FIG. 13 may be omitted to prevent redundant explanation, and only the difference will be explained.

The thermal hinge assembly (for example, the thermal hinge assembly 30 shown in FIGS. 1 and 2) according to an embodiment may have first, second hinge arms 381, 382 coaxially disposed along a hinge axis *h*. According to an embodiment, the first hinge arm 381 may be connected to the first hollow hinge member 32, and the second hinge arm 382 may be connected to the second hollow hinge member 33. According to an embodiment, the first hinge arm 381 may be coupled to an external end of the first hollow hinge member 32, and the second hinge arm 382 may be coupled to an external end of the second hollow hinge member 33. According to an embodiment, the first, second hinge arms 381, 382 may function to rotatably connect first, second housings (for example, the first, second housings 10, 20 shown in FIGS. 1A and 2A).

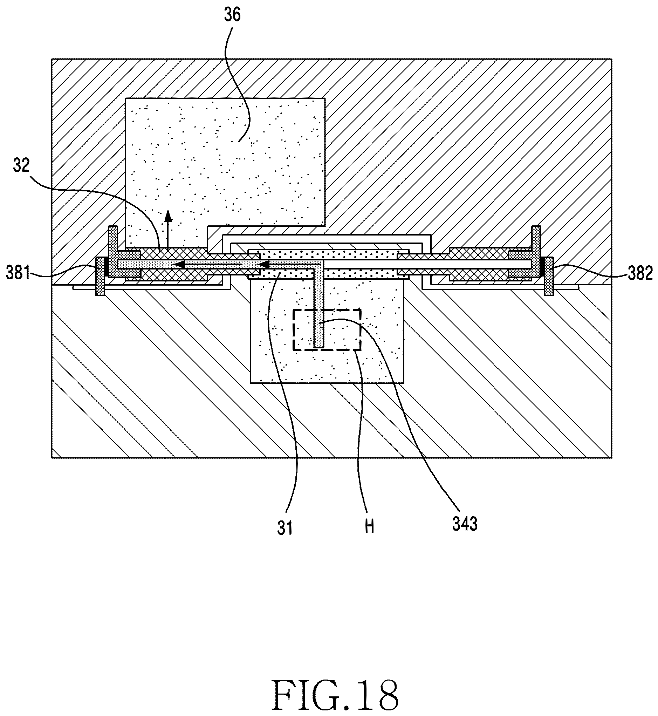

Referring to FIG. 18, the same configurations of a thermal hinge assembly according to an embodiment as the thermal hinge assembly shown in FIG. **14** may be omitted to prevent redundant explanation, and only the difference will be explained.

The thermal hinge assembly (for example, the thermal hinge assembly 30 shown in FIG. 1) according to an embodiment may have first, second hinge arms 381, 382 coaxially disposed along a hinge axis h. According to an embodiment, the first hinge arm 381 may be connected to the first hollow hinge member 32, and the second hinge arm 382 may be connected to the second hollow hinge member 33. According to an embodiment, the first hinge arm 381 may be coupled to an external end of the first hollow hinge member 32, and the second hinge arm 382 may be coupled to an external end of the second hollow hinge member 33.

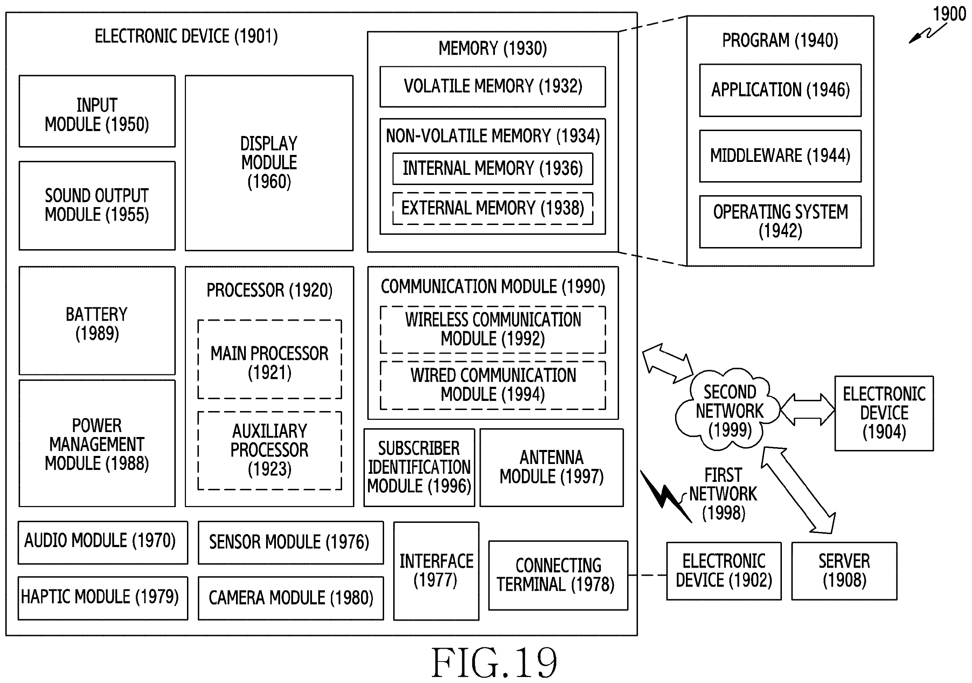

FIG. 19 is a block diagram of an electronic device in a network environment according to various embodiments.

Referring to FIG. 19, the electronic device 1901 in the network environment 1900 may communicate with an electronic device 1902 via a first network 1998 (e.g., a short-range wireless communication network), or may communicate with at least one of an electronic device 1904 or a server 1908 via a second network 1999 (e.g., a long-range wireless communication network). According to an embodiment, the electronic device 1901 may communicate with the electronic device 1904 via the server 1908. According to an embodiment, the electronic device 1901 may include a processor 1920, a memory 1930, an input module 1950, a sound output module 1955, a display module 1960, an audio module 1970, a sensor module 1976, an interface 1977, a connection terminal 1978, a haptic module 1979, a camera module 1980, a power management module 1988, a battery 1989, a communication module 1990, a subscriber identification module 1996, or an antenna module 1997. In a certain embodiment, at least one (e.g., the connection terminal 1978) of the components may be omitted from the electronic device 1901, or one or more other components may be added in the electronic device 1901. In a certain embodiment, some of the components (for example, the sensor module 1976, the camera module 1980, or the antenna module 1997) may be integrated into one component (for example, the display module 1960).

The processor 1920 may execute, for example, software (e.g., a program 1940) to control at least one other component (e.g., a hardware or software component) of the electronic device 1901 connected to the processor 1920, and may perform various data processing or computation. According to an embodiment, as at least part of the data processing or computation, the processor 1920 may store a command or data received from another component (e.g., the sensor module 1976 or the communication module 1990) in a volatile memory 1932, may process a command or data stored in the volatile memory 1932, and may store resulting data in a non-volatile memory 1934. According to an embodiment, the processor 1920 may include a main processor 1921 (e.g., a central processing device or an application processor), or an auxiliary processor 1923 (e.g., a graphics processing device, a neural processing unit (NPU), an image signal processor, a sensor hub processor, or a communication processor) that is operable independently from, or in conjunction with, the main processor 1921. For example, when the electronic device 1901 includes the main processor 1921 and the auxiliary processor 1923, the auxiliary processor 1923 may be set to consume lower power than the main processor 1921, or to be specific to a designated function. The auxiliary processor 1923 may be implemented as separate from, or as part of the main processor 1921.

The auxiliary processor 1923 may control at least part of functions or states related to at least one component (e.g., the display module 1960, the sensor module 1976, or the communication module 1990) among the components of the electronic device 1901, instead of the main processor 1921 while the main processor 1921 is in an inactive (e.g., sleep) state, or together with the main processor 1921 while the main processor 1921 is in an active state (e.g., executing an application). According to an embodiment, the auxiliary processor 1923 (e.g., an image signal processor or a communication processor) may be implemented as part of other components (e.g., the camera module 1980 or the communication module 1990) functionally related thereto. According to an embodiment, the auxiliary processor 1923 (e.g., a neural processing unit) may include a hardware structure that is specific to processing of an artificial intelligence (AI) model. The AI model may be created through machine learning. Such learning may be performed in the electronic device 1901 itself, which performs the AI model, or may be performed through a separate server (for example, the server 1908). A learning algorithm may include, for example, supervised learning, unsupervised learning, semi-supervised learning, or reinforcement learning, but is not limited to the above-described examples. The AI model may include a plurality of AI neural network layers. The AI neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), a deep Q-network or one of combinations of two or more of the aforementioned neural networks, but is not limited to the above-described examples. The AI model may include a software structure additionally or alternatively, in addition to the hardware structure.

The memory 1930 may store various data used by at least one component (e.g., the processor 1920 or the sensor module 1976) of the electronic device 1901. The data may include, for example, software (e.g., the program 1940) and input data or output data regarding a command related thererto. The memory 1930 may include the volatile memory 1932 or the non-volatile memory 1934.

The program 1940 may be stored in the memory 1930 as software, and may include, for example, an operating system 1942, middleware 1944, or an application 1946.

The input module 1950 may receive a command or data to be used by a component (e.g., the processor 1920) of the electronic device 1901, from the outside (e.g., a user) of the electronic device 1901. The input module 1950 may include, for example, a microphone, a mouse, a keyboard, a key (for example, a button) or a digital pen (for example, a stylus pen).

The sound output module 1955 may output sound signals to the outside of the electronic device 1901. The sound output module 1955 may include, for example, a speaker or a receiver. The speaker may be used for general purposes, such as playing multimedia or playing record. The receiver may be used to receive an incoming call. According to an embodiment, the receiver may be implemented as separate from, or as part of the speaker.

The display module 1960 may visually provide information to the outside (e.g., a user) of the electronic device 1901. The display module 1960 may include, for example, a display, a hologram device, or a projector and a control circuitry to control a corresponding device. According to an embodiment, the display module 1960 may include a touch sensor set to detect a touch, or a pressure sensor set to measure the intensity of force generated by the touch.

The audio module 1970 may convert a sound into an electrical signal or, reversely, may convert an electrical signal into a sound. According to an embodiment, the audio module 1970 may obtain a sound via the input module 1950, or may output a sound via the sound output module 1955 or an external electronic device device (e.g., the electronic device 1902) (e.g., a speaker or a headphone) directly or wirelessly connected with the electronic device 1901.

The sensor module 1976 may detect an operational state (e.g., power or temperature) of the electronic device 1901 or an environmental state (e.g., a state of a user) external to the electronic device, and may generate an electrical signal or data value corresponding to the detected state. According to an embodiment, the sensor module 1976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1977 may support at least one specified protocol to be used for the electronic device 1901 to be connected with an external electronic device (e.g., the electronic device 1902) directly or wirelessly. According to an embodiment, the interface 1977 may include, for example, a high definition multimedia interface (HDMI), a universal serial bus (USB) interface, a secure digital (SD) card interface, or an audio interface.

The connection terminal 1978 may include a connector via which the electronic device 1901 may be physically connected with an external electronic device (e.g., the electronic device 1902). According to an embodiment, the connection terminal 1978 may include, for example, a HDMI connector, a USB connector, a SD card connector, or an audio connector (e.g., a headphone connector).

The haptic module 1979 may convert an electrical signal into a mechanical stimulus (e.g., a vibration or a movement) or electrical stimulus which may be perceived by a user via tactile sensation or kinesthetic sensation of the user. According to an embodiment, the haptic module 1979 may include, for example, a motor, a piezoelectric element, or an electric stimulator.

The camera module 1980 may shoot a still image or a moving image. According to an embodiment, the camera module 1980 may include one or more lenses, image sensors, image signal processors, or flashes.

The power management module 1988 may manage power supplied to the electronic device 1901. According to an embodiment, the power management module 1988 may be implemented as at least part of, for example, a power management integrated circuit (PMIC).

The battery 1989 may supply power to at least one component of the electronic device 1901. According to an embodiment, the battery 1989 may include, for example, a primary cell which is not rechargeable, a secondary cell which is rechargeable, or a fuel cell.

The communication module 1990 may support establishment of a direct (e.g., wired) communication channel or a wireless communication channel between the electronic device 1901 and an external electronic device (e.g., the electronic device 1902, the electronic device 1904, or the server 1908), and performance of communication via the established communication channel. The communication module 1990 may include at least one communication processor that is operable independently from the processor 1920 (e.g., an application processor) and supports direct (e.g., wired) communication or wireless communication. According to an embodiment, the communication module 1990 may include a wireless communication module 1992 (e.g., a cellular communication module, a short-range wireless communication module, or a global navigation satellite system (GNSS) communication module) or a wired communication module 1994 (e.g., a local area network (LAN) communication module or a power line communication module). A corresponding communication module of these communication modules may communicate with the external electronic device 1904 via the first network 1998 (e.g., a short-range communication network, such as Bluetooth^{™}, wireless-fidelity (Wi-Fi) direct, or infrared data association (IrDA)) or the second network 1999 (e.g., a long-range communication network, such as a legacy cellular network, a 5G network, a next-generation communication network, the Internet, or a computer network (e.g., LAN or wide area network (WAN)). These various types of communication modules may be integrated into a single component (e.g., a single chip), or may be implemented as a plurality of components (e.g., a plurality of chips) separate from one another. The wireless communication module 1992 may identify or authenticate the electronic device 1901 in a communication network, such as the first network 1998 or the second network 1999, using subscriber information (e.g., international mobile subscriber identity (IMSI)) stored in the subscriber identification module 1996.

The wireless communication module 1992 may support a 5G network beyond a 4G network, and a next-generation communication technology, for example, a new radio (NR) access technology. The NR access technology may support high-speed transmission of high-capacity data (enhanced mobile broadband (eMBB)), terminal power minimization and access by multiple terminals (massive machine type communications (mMTC)), or high-reliability and low-latency (ultra-reliable and low latency communications (URLLC)). For example, the wireless communication module 1992 may support a high frequency band (for example, mmWave band) to achieve a high data transmission rate. The wireless communication module 1992 may support various technologies for guaranteeing performance in a high frequency band, for example, beamforming, massive multiple-input and multiple-output (MIMO), full dimensional MIMO (FD-MIMO), array antenna, analog beamforming, or large scale antenna. The wireless communication module 1992 may support various requirements prescribed for the electronic device 1901, an external electronic device (for example, the electronic device 1504), or a network system (for example, the second network 1999). According to an embodiment, the wireless communication module 1992 may support a peak data rate (for example, 20 Gbps or more) for implementing eMBB, a loss coverage (for example, 164 dB or less) for implementing mMTC, or U-plane latency (for example, downlink (DL) and uplink (UL) of 0.5 ms or less, or round trip of 1 ms or less) for implementing URLLC.

The antenna module 1997 may transmit or receive a signal or power to or from the outside (e.g., an external electronic device). According to an embodiment, the antenna module 1997 may include an antenna including a radiator which is formed of a conductor or a conductive pattern formed on a substrate (for example, a PCB). According to an embodiment, the antenna module 1997 may include a plurality of antennas (for example, an array antenna). In this case, at least one antenna appropriate for a communication scheme used in a communication network, such as the first network 1998 or the second network 1999, may be selected from the plurality of antennas by the communication module 1990. A signal or power may be transmitted or received between the communication module 1990 and an external electronic device via the selected at least one antenna. According to a certain embodiment, in addition to the radiator, other components (for example, a radio frequency integrated circuit (RFIC)) may be additionally formed as part of the antenna module 1997.

According to various embodiments, the antenna module 1997 may form an mmWave antenna module. According to an embodiment, the mmWave antenna module may include a printed circuit board, an RFIC which is disposed on a first surface (for example, a lower surface) of the printed circuit board or adjacent thereto, and supports a designated high frequency band (for example, mmWave band), and a plurality of antennas (for example, an array antenna) which are disposed on a second surface (for example, an upper surface or a side surface) of the printed circuit board or adjacent thereto, and transmit or receive a signal of the designated high frequency band.

At least some of the above-described components may be connected to one another and may exchange signals (e.g., commands or data) with one another through an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1901 and the external electronic device 1904 via the server 1908 connected to the second network 1999. The external electronic device 1902 or 1904 may be a device of a same type as, or a different type, from the electronic device 1901. According to an embodiment, all or some of operations executed at the electronic device 1901 may be executed in one or more external electronic devices of the external electronic devices 1902, 1904, or 1908. For example, if the electronic device 1901 should perform a function or a service automatically, or in response to a request from a user or another device, the electronic device 1901, instead of or in addition to executing the function or the service by itself, may request one or more external electronic devices to perform at least part of the function or the service. The one or more external electronic devices receiving the request may perform at least part of the function or the service requested, or an additional function or an additional service related to the request, and may transfer an outcome of the performing to the electronic device 1901. The electronic device 1901 may provide the outcome, with or without further processing of the outcome, as at least part of a reply to the request. To achieve this, cloud computing, distributed computing, mobile edge computing (MEC), or client-server computing technology may be used, for example. The electronic device 1901 may provide an ultra-low latency service by using distributed computing or mobile edge computing, for example. In another embodiment, the external electronic device 1904 may include an Internet of things (IoT) device. The server 1908 may be an intelligent server that uses machine learning and/or a neural network. According to an embodiment, the external electronic device 1904 or the server 1908 may be included in the second network 1999. The electronic device 1901 may be applied to an intelligent service (for example, smart home, smart city, smart car, or health care) based on a 5G communication technology and an IoT-related technology.

According to an embodiment, an electronic device (for example, the electronic device 100 shown in FIG. 1A) may include: a first housing (for example, the first housing 10 shown in FIG. 1A) including at least one first heat generation element; a second housing (for example, the second housing 20 shown in FIG. 1A) including at least one second heat generation element; and a thermal hinge assembly (for example, the thermal hinge assembly 30 shown in FIG. 1A) configured to rotatably connect the first, second housings with reference to a hinge axis (for example, the hinge axis h shown in FIG. 1A), and the thermal hinge assembly may be made of a metallic material and may include: a first hollow hinge member (for example, the first hollow hinge member 32 shown in FIG. 3); a second hollow hinge member (for example, the second hollow hinge member 33 shown in FIG. 3) disposed to be spaced apart from the first hollow hinge member along the hinge axis; a center hinge member (for example, the center hinge member 31 shown in FIG. 3) disposed between the first, second hollow hinge members and disposed along the hinge axis; at least one heat transfer member (for example, the heat transfer member 34 shown in FIG. 3) disposed to penetrate through the first, second hollow hinge members and the center hinge member, and thermally coupled with the first, second hollow hinge members and the center hinge member; a first rotation guide part (for example, the first rotation guide part 351 shown in FIG. 6) coupled with one end of the center hinge member and the first hollow hinge member; and a second rotation guide part (for example, the second rotation guide part 352 shown in FIG. 6) coupled with the other end of the center hinge member and the second hollow hinge member.

According to an embodiment, the first rotation guide part (for example, the first rotation guide part 351 shown in FIG. 6) may include: a first coupling groove (for example, the first coupling groove 314 shown in FIG. 5) formed on one end of the center hinge member; and a first protrusion (for example, the first protrusion 323 shown in FIG. 5) formed on the first hollow hinge member to be thermally and rotatably coupled to the first coupling groove, and the second rotation guide part (for example, the second rotation guide part 352 shown in FIG. 6) may include: a second coupling groove (for example, the second coupling groove 315 shown in FIG. 6) formed on the other end of the center hinge member; and a second protrusion (for example, the second protrusion 333 shown in FIG. 6) formed on the second hollow hinge member to be thermally and rotatably coupled to the second coupling groove.

According to an embodiment, a diameter of the first coupling groove (for example, the first coupling groove 314 shown in FIG. 5) and a diameter of the first protrusion (for example, the first protrusion 323 shown in FIG. 5) may be substantially identical to each other, and a diameter of the second coupling groove (for example, the second coupling groove 315 shown in FIG. 5) and a diameter of the second protrusion (for example, the second protrusion 333 shown in FIG. 6) may be substantially identical to each other.

According to an embodiment, the heat transfer member (for example, the heat transfer member 34 shown in FIG. 6) may provide a heat transfer path between the first, second housings as a heat pipe.

According to an embodiment, the electronic device may further include a first thermal spreader (for example, the first thermal spreader 35 shown in FIG. 3) disposed in the first housing (for example, the first housing 10 shown in FIG. 1A) to be thermally coupled to the center hinge member.

According to an embodiment, the first thermal spreader (for example, the first thermal spreader 35 shown in FIG. 3) may include a first protrusion part (fpr example, the first protrusion part 350 shown in FIG. 3) to be connected to the center hinge member, and the first protrusion part may be thermally coupled with the center hinge member (for example, the center hinge member 31 shown in FIG. 3).

According to an embodiment, the electronic device may further include a second thermal spreader (for example, the second thermal spreader 36 shown in FIG. 3) disposed in the second housing to be thermally coupled to the first, second hollow hinge members.

According to an embodiment, the second thermal spreader (for example, the second thermal spreader 36 shown in FIG. 3) may include a second protrusion part (for example, the second protrusion part 360 shown in FIG. 3) to be connected to the first, second hollow hinge members, and the second protrusion part may be thermally coupled to the first, second hollow hinge members (for example, the first, second hollow hinge members 32, 33 shown in FIG. 3).

According to an embodiment, the first thermal spreader (for example, the first thermal spreader 35 shown in FIG. 3) may be thermally disposed to face the first housing, and may be thermally coupled with the first heat generation element.

According to an embodiment, the thermal hinge assembly (for example, the thermal hinge assembly 30 shown in FIG. 1A) may further include first, second hinge arms (for example, the first, second hinge arms 381, 382 shown in FIG. 15) which connect the first, second housings (for example, the first, second housings 10, 20 shown in FIG. 1A) to be rotatable with reference to the hinge axis, and are coupled with the first, second hollow hinge members, respectively.

According to an embodiment, the center hinge member (for example, the center hinge member 31 shown in FIG. 6) may include: a center hinge body (for example, the center hinge body 311 shown in FIG. 6); a cylindrical opening (for example, the cylindrical opening 312 shown in FIG. 6) formed inside the center hinge body; and a fastening part (for example, the fastening part 313 shown in FIG. 6) formed on an outer circumference of the center hinge body to be coupled to the first thermal spreader.

According to an embodiment, the first hollow hinge member (for example, the first hollow hinge member 32 shown in FIG. 5) may include: a first hinge body (for example, the first hinge body 321 shown in FIG. 5); a first cylindrical opening (for example, the first cylindrical opening 322 shown in FIG. 5) formed inside the first hinge body to allow the heat transfer member to penetrate therethrough; and a first fastening part (for example, the first fastening part 324 shown in FIG. 6) formed on an outer circumference of the first hinge body to be fastened to the second thermal spreader, and the second hollow hinge member (for example, the second hollow hinge member 33 shown in FIG. 6) may include: a second hinge body (for example, the second hinge body 331 shown in FIG. 6); a second cylindrical opening (for example, the second cylindrical opening 332 shown in FIG. 6) formed inside the second hinge body to allow the heat transfer member to penetrate therethrough; and a second fastening part (for example, the second fastening part 334 shown in FIG. 6) formed on an outer circumference of the second hinge body to be fastened to the second thermal spreader.

According to an embodiment, the heat transfer member (for example, the heat transfer member 34 shown in FIG. 6) may extend from the first hollow hinge member (for example, the first hollow hinge member 32 shown in FIG. 6) to the second hollow hinge member (for example, the second hollow hinge member 33 shown in FIG. 6) as a single heat pipe of a cylindrical shape.

According to an embodiment, the heat transfer member may include: a first heat pipe (for example, the first hinge pipe 341 shown in FIG. 11) which has a cylindrical shape and extends from the first hollow hinge member (for example, the first hollow hinge member 341 shown in FIG. 11) to a middle of the center hinge member; and a second heat pipe (for example, the second heat pipe 341 shown in FIG. 11) which has a cylindrical shape and extends from the middle of the center hinge member to the second hollow hinge member.

According to an embodiment, the electronic device may further include an additional heat pipe (for example, the additional heat pipe 343 shown in FIG. 14) disposed in the first housing to be thermally coupled with the heat transfer member and the heat generation element.

The electronic device according to various embodiments of the disclosure may be various types of devices. The electronic device may include, for example, a portable communication device (for example, a smart phone), a computer device, a portable multimedia device, a portable medical device, a camera, a wearable device, or a home appliance. According to an embodiment of the disclosure, the electronic device is not limited to the above-described devices.

It should be appreciated that various embodiments of the disclosure and the terms used therein are not intended to limit the technological features set forth herein to particular embodiments, and include various changes, equivalents, or alternatives for a corresponding embodiment. With regard to the description of the drawings, similar reference numerals may be used to refer to similar or related elements. It is to be understood that a singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include one or all possible combinations of the items enumerated together in a corresponding one of the phrases. As used herein, such terms as "1st" and "2nd," or "first" and "second" may be used to simply distinguish a corresponding component from another, and does not limit the components in other aspect (for example, importance or order). It is to be understood that if an element (for example, a first element) is referred to, with or without the term "operatively" or "communicatively", as "coupled with," "coupled to", "connected with", or "connected to" another element (for example, a second element), it means that the element may be coupled with another element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments of the disclosure may be implemented as software (for example, the program 1940) including one or more instructions that are stored in a storage medium (for example, internal memory 1936 or external memory 1938) that is readable by a machine (for example, the electronic device 1901). For example, a processor (for example, the processor 1920) of the machine (for example, the electronic device 1901) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. The term "non-transitory" simply means that the storage medium is a tangible device, and does not include a signal (for example, an electromagnetic wave), but this term does not differentiate between a case where data is semi-permanently stored in the storage medium and a case where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (for example, compact disc read only memory (CD-ROM)), or may be distributed (for example, downloaded or uploaded) online via an application store (for example, Play Store^{™}), or between two user devices (for example, smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (for example, a module or a program) of the above-described components may include a single entity or multiple entities, and some of the multiple entities may be separately disposed in other components. According to various embodiments, one or more of the above-described components or operations may be omitted, or one or more other components or operations may be added. Alternatively or additionally, a plurality of components (for example, modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first housing comprising at least one first heat generation element;
a second housing comprising at least one second heat generation element; and
a thermal hinge assembly configured to rotatably connect the first, second housings with reference to a hinge axis,
wherein the thermal hinge assembly is made of a metallic material and comprises:
a first hollow hinge member;
a second hollow hinge member disposed to be spaced apart from the first hollow hinge member along the hinge axis;
a center hinge member disposed between the first, second hollow hinge members and disposed along the hinge axis;
at least one heat transfer member disposed to penetrate through the first, second hollow hinge members and the center hinge member, and thermally coupled with the first, second hollow hinge members and the center hinge member;
a first rotation guide part coupled with one end of the center hinge member and the first hollow hinge member; and
a second rotation guide part coupled with the other end of the center hinge member and the second hollow hinge member.

2. The electronic device of claim 1, wherein the first rotation guide part comprises:
a first coupling groove formed on one end of the center hinge member; and
a first protrusion formed on the first hollow hinge member to be thermally and rotatably coupled to the first coupling groove, and
wherein the second rotation guide part comprises:
a second coupling groove formed on the other end of the center hinge member; and
a second protrusion formed on the second hollow hinge member to be thermally and rotatably coupled to the second coupling groove.

3. The electronic device of claim 2, wherein a diameter of the first coupling groove and a diameter of the first protrusion are substantially identical to each other, and a diameter of the second coupling groove and a diameter of the second protrusion are substantially identical to each other.

4. The electronic device of claim 1, wherein the heat transfer member provides a heat transfer path between the first, second housings as a heat pipe.

5. The electronic device of claim 1, further comprising a first thermal spreader disposed in the first housing to be thermally coupled to the center hinge member.

6. The electronic device of claim 5, wherein the first thermal spreader comprises a first protrusion part to be connected to the center hinge member, and the first protrusion part is thermally coupled with the center hinge member.

7. The electronic device of claim 6, further comprising a second thermal spreader disposed in the second housing to be thermally coupled to the first, second hollow hinge members.

8. The electronic device of claim 7, wherein the second thermal spreader comprises a second protrusion part to be connected to the first, second hollow hinge members, and the second protrusion part is thermally coupled to the first, second hollow hinge members.

9. The electronic device of claim 7, wherein the first thermal spreader is thermally disposed to face the first housing, and is thermally coupled with the first heat generation element.

10. The electronic device of claim 1, wherein the thermal hinge assembly further comprises first, second hinge arms which connect the first, second housings to be rotatable with reference to the hinge axis, and are coupled with the first, second hollow hinge members, respectively.

11. The electronic device of claim 5, wherein the center hinge member comprises:
a center hinge body;
a cylindrical opening formed inside the center hinge body; and
a fastening part formed on an outer circumference of the center hinge body to be coupled to the first thermal spreader.

12. The electronic device of claim 7, wherein the first hollow hinge member comprises:
a first hinge body;
a first cylindrical opening formed inside the first hinge body to allow the heat transfer member to penetrate therethrough; and
a first fastening part formed on an outer circumference of the first hinge body to be fastened to the second thermal spreader, and
wherein the second hollow hinge member comprises:
a second hinge body;
a second cylindrical opening formed inside the second hinge body to allow the heat transfer member to penetrate therethrough; and
a second fastening part formed on an outer circumference of the second hinge body to be fastened to the second thermal spreader.

13. The electronic device of claim 1, wherein the heat transfer member extends from the first hollow hinge member to the second hollow hinge member as a single heat pipe of a cylindrical shape.

14. The electronic device of claim 1, wherein the heat transfer member comprises:
a first heat pipe which has a cylindrical shape and extends from the first hollow hinge member to a middle of the center hinge member; and
a second heat pipe which has a cylindrical shape and extends from the middle of the center hinge member to the second hollow hinge member.

15. The electronic device of claim 1, further comprising an additional heat pipe disposed in the first housing to be thermally coupled with the heat transfer member and the heat generation element.
